# EUROPEAN PATENT SPECIFICATION

(11) **EP 3 680 158 B1**
(45) Date of publication and mention of the grant of the patent: **26.05.2021**
(21) Application number: 19189252.0
(22) Date of filing: 31.07.2019
(51) Int. Cl.: B62K 3/00, B62K 5/003, B62K 13/00, B62K 15/00

(54) **TELESCOPIC FRAME STRUCTURE OF SCOOTER**
TELESKOPISCHE RAHMENSTRUKTUR EINES ROLLERS
STRUCTURE DE CADRE TÉLESCOPIQUE DE SCOOTER

(30) Priority: 09.01.2019 TW 108200376 U
(43) Date of publication of application: 15.07.2020
(73) Proprietor: Wu's Tech Co., Ltd., Hsinchu City (TW)
(72) Inventor: CHIU, Chien-Liang, Taipei (TW)
(74) Representative: Zeitler Volpert Kandlbinder Patentanwälte Partnerschaft mbB

(56) References cited:
- EP-A1- 3 100 938
- EP-A1- 3 162 685
- KR-B1- 101 924 328

## Description

### BACKGROUND OF INVENTION

### 1. Field of the Invention

The present invention relates generally to a scooter frame, and more particularly to an innovative frame with telescopic positioning function, which is a structure type revealer.

### 2. Description of Related Art

There are many types of electric scooters currently available at the market, and the electric scooter in the present invention means a type in which the wheel body part is in a three-wheel or a four-wheel type; the electric scooter is widely used by the elders and the handicapped because of the smooth driving and easy-to-operate features.

However, the electric scooter of the type referred to in the present invention also has a problem that the scooter body is large in size and relatively occupying the space for placement; previously, although there have been related industries attempting to develop an improved electric scooter with a scooter body folding function, but its folding effect is still not perfect.

First, currently, the scooters at the market can be roughly divided into three structures: a powered base, a scooter head structure mounted in front of the base, and a seat structure mounted behind the base. The folding method mainly uses the pivot joint structure and the connecting rod structure, so that the folded scooter head structure and the seat structure are as close as possible to the base; however, this folding method is only to reduce the overall height of the scooter. The folded scooter still retains the original length of the scooter, in this way, although which can reduce the volume during transportation and storage, but it still occupies a large floor area in the home for the user, it also causes the current electric scooter to still fail to achieve the practical folding function

Document KR101924328B shows a telescopic frame structure of a scooter which includes: a rear frame body; a front frame body, disposed at the front end interval of the rear frame body; a telescopic connection frame which is disposed between the front frame body and the rear frame body to be retractable and adjustable under force, so that the front frame body and the rear frame body are selectively reciprocally movable to change the total length of the telescopic frame structure of the scooter.

### SUMMARY OF THE INVENTION

The main object of the present invention is to provide a frame structure, and the technical problem to be solved realizes a breakthrough in how to develop a new type telescopic frame structure of scooter which is more ideal and practical.

The technical feature of the present invention is mainly that the telescopic frame structure of scooter comprises: a rear frame body and a front frame body disposed at a front spacing of the rear frame body; a telescopic connection frame installed between the front frame body and the rear frame body is in a forced-telescopic and adjustable state, so that the front frame body and the rear frame body can selectively reciprocate relative to each other, thereby changing the total telescopic frame structure length of the scooter; a limiting member includes a front plate body and a rear plate body disposed above the telescopic connection frame, wherein the front plate body and the rear plate body respectively have a front side and a rear side, and the front side of the front plate body is pivotally disposed at a rear edge of the front frame body through a first pivoting shaft member, and a rear side of the rear plate body is pivotally disposed at a front edge of the rear frame body through a second pivoting shaft member, and the rear side of the front plate body is pivoted to the front side of the rear plate body through the third pivoting shaft member. When the telescopic connection frame is in an elongated state, the front plate body and the rear plate body are relatively interlocked by the third pivoting shaft member in flat rotary fulcrum state; wherein the axle center definition of the first pivoting shaft member forms a first pivoting axis, the axle center definition of the second pivoting shaft member forms a second pivoting axis, and the axle center definition of the third pivoting shaft member forms a third pivoting axis; and the connecting definition between the first pivoting axis and the second pivoting axis forms a virtual connecting axis, the virtual connecting axis is in an any state of horizontal line or approaching the horizontal line, and the virtual connecting axis corresponding to the third pivoting shaft member defines an intermediate line section and the height of the third pivot axis is lower than the height of the intermediate line section.

The main effect and advantage of the present invention are that the connecting definition between the first pivoting axis and the second pivoting axis forms a virtual connecting axis, and the virtual connecting axis corresponding to the third pivoting shaft member defines an intermediate line section, so that the height of the third pivot axis is lower than the height of the intermediate line section. When the front plate body and the rear plate body of the telescopic frame of the scooter are in a flat state, the pivoting point between the front plate body and the rear plate body is in the innovation form of a descending type, thereby improving the stability of the front plate body and the rear plate body, effectively reducing the probability of any folding and jumping during the driving process of the scooter, and improving the structural stability, use safety and practical progress of the scooter frame.

Another object of the present invention is to provide another technical feature that the first abutting part and the second abutting part are disposed respectively by the upper edge of the rear side of the front plate body and the upper edge of the front side of the rear plate body. When the front frame body and the rear frame body are in a flat state, the first abutting portion and the second abutting portion are abutted against each other, so that the front plate body and the rear plate body are in a dead point state, and the scooter can ensure that the relative position between the front frame body and the rear frame body is not arbitrarily changed during the driving process, thereby achieving the advantages and practical progress of further improving the use stability and safety of the scooter.

Another object of the present invention is to further provide another technical feature that the operation part is disposed by one selected from the front plate body and the rear plate body, so that when the rear frame body is relatively retracted before the limiting member is engaged, it is convenient for the user to easily lift up the front plate body and the rear plate body from the operation part.

A further object of the present invention is to further provide another technical feature that a snap member is disposed by one selected from the front plate body and the rear plate body, and the snap member is selectively snapped into the telescopic connection frame structure, and can produce appropriate auxiliary snapping positioning effect in the flat state of the front plate body and the rear plate body.

### BRIEF DESCRIPTION OF THE DRAWINGS

Fig.1 is a side view of the scooter of the present invention.
Fig.2 is a side view of the folded seat of the scooter in Fig.1.
Fig.3 is a top view of the telescopic connection frame of the present invention in unfolding state.
Fig.4 is a three-dimensional diagram of the partial component decomposition of the present invention.
Fig.5 is a three-dimensional diagram of the front plate body and rear plate body of the present invention in folded state.
Fig.6 is a side view of the scooter exposed corresponding to Fig.5.
Fig.7 is a three-dimensional outside view of the scooter of the present invention after folding.
Fig.8 is a side view of the unfolded limiting member of the present invention.
Fig.8A is a partial enlargement diagram of Fig.8.
Fig.8B is an embodiment diagram of the top surface of a front plate body and a rear plate body of the present invention in an angular state of less than 180° included angle.
Fig.9 is a three-dimensional upward view of the folded limiting member of the present invention.
Fig.10 is a three-dimensional upward view of the folded limiting member of the present invention.
Fig.11 is a vertical sectional view of the rear plate body provided with snap member snapped in the telescopic connection frame.
Fig.12 is an embodiment diagram of the operation part of the present invention in the open-hole type.

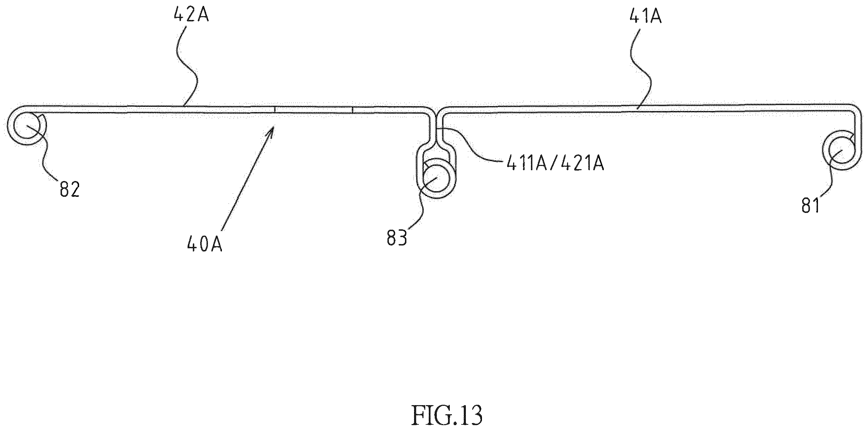

Fig.13 is a side view of the second preferred embodiment of the folded limiting member of the present invention.

### DETAILED DESCRIPTION OF THE INVENTION

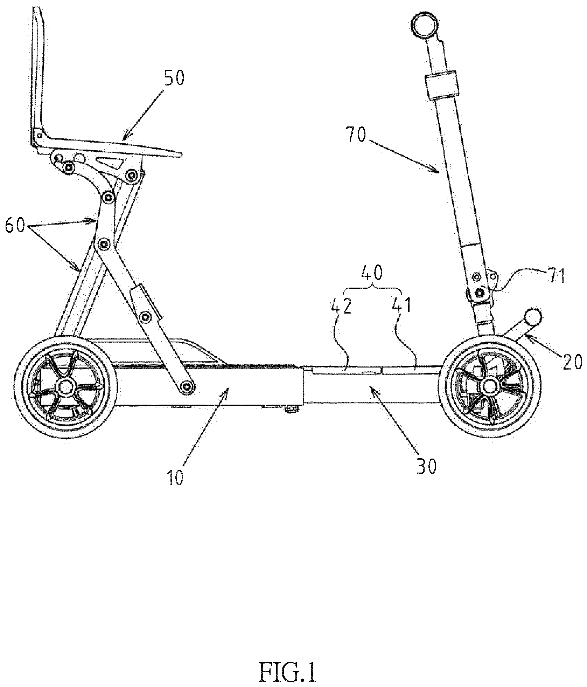

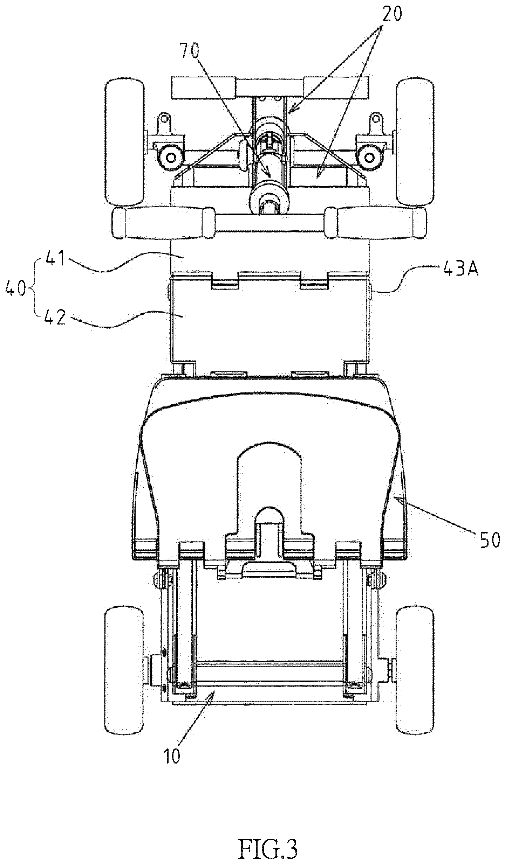

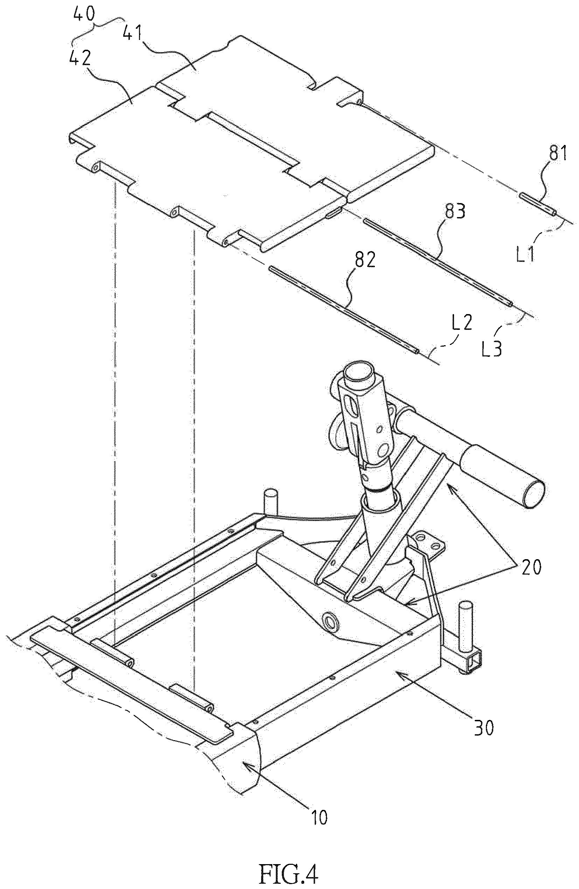

Referring to Fig. 1 to Fig. 11 for the preferred embodiments of the telescopic frame structure of the scooter of the present invention. However, these embodiments are for illustrative purposes only and are not limited by the structure in the patent application.

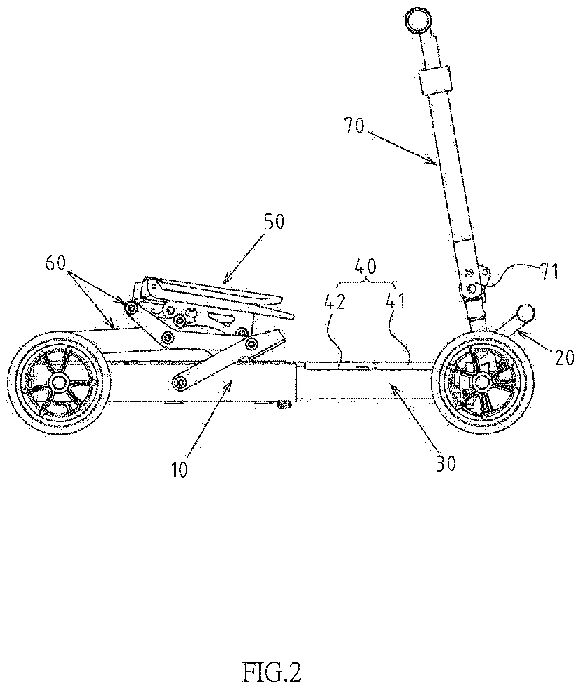

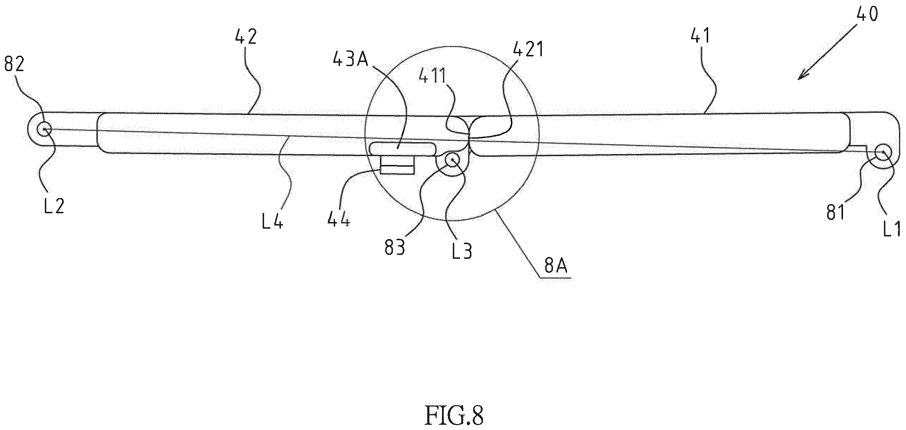

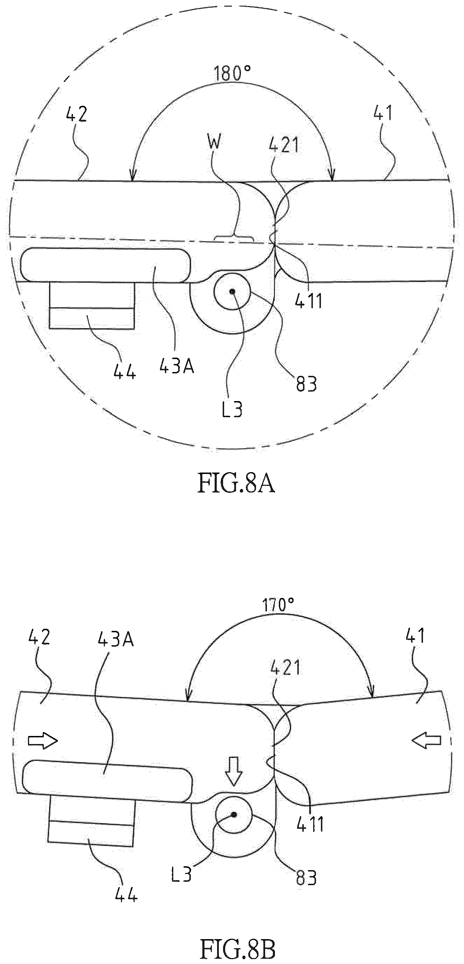

The telescopic frame structure of the scooter includes a rear frame body 10 and a set of front frame bodies 20 disposed at a front end of the rear frame body 10; a forced-telescopic and adjustable telescopic connection frame 30 is disposed between the front frame body 20 and the rear frame body 10, so that the front frame body 20 and the rear frame body 10 are selectively reciprocally movable to change the total length of the telescopic frame structure of the scooter; a limiting member 40 comprises a front plate body 41 and a rear plate body 42 disposed above the telescopic connection frame 30, the front plate body 41 and the rear plate body 42 respectively have a front side and a rear side, wherein the front side of the plate body 41 is pivoted to the rear edge of the front frame body 20 through a first pivoting shaft member 81. The rear side of the rear plate body 42 is pivoted to the front edge of the rear frame body 10 through a second pivoting shaft member 82. The rear side of the front plate body 41 is pivoted to the front side of the rear plate body 42 through a third pivoting shaft member 83. When the telescopic connection frame 30 is in an unfolded state, the front plate body 41 and the rear plate body 42 are relatively interlocked by the third pivoting shaft member 83 in flat rotary fulcrum state (as shown in Fig. 2 and 8); wherein the axle center definition of the first pivoting shaft member 81 forms a first pivoting axis L1, the axle center definition of the second pivoting shaft member 82 forms a second pivoting axis L2, and the axle center definition of the third pivoting shaft member 83 forms a third pivoting axis L3; and the connecting definition between the first pivoting axis L1 and the second pivoting axis L2 forms a virtual connecting axis L4, the virtual connecting axis L4 is in an any state of horizontal line or approaching the horizontal line, and the virtual connecting axis L4 corresponding to the third pivoting shaft member 83 defines an intermediate line section W and the height of the third pivot axis L3 is lower than the height of the intermediate line section W(as shown in Fig. 8 and 8A).

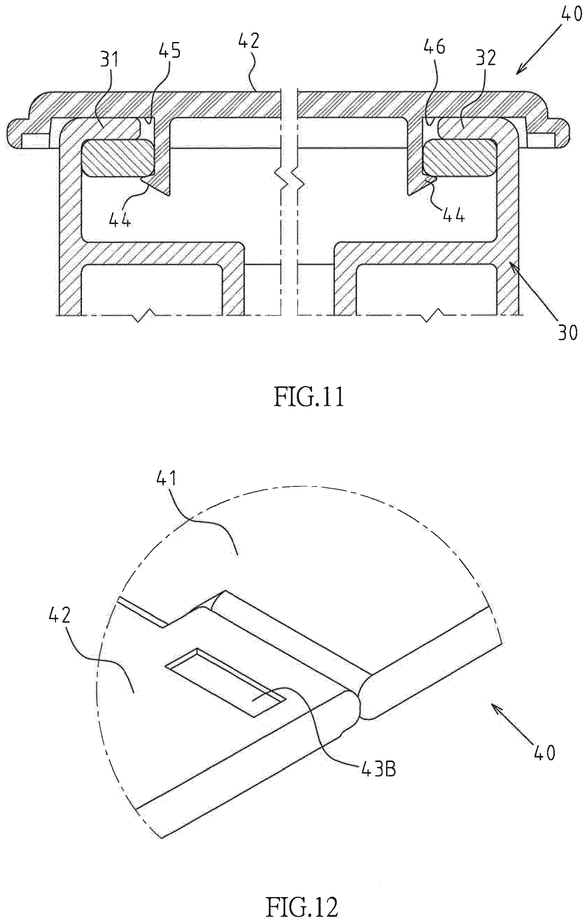

As shown in Fig. 11, wherein the telescopic connection frame 30 includes two rod bodies 31 and 32 at left and right interval configuration; the front plate body 41 and the bottom of the rear plate body 42 are provided with two abutting parts 45 and 46 at left and right interval configuration, so that the two abutting parts 45 and 46 are correspondingly abutted downward against the two rod bodies 31 and 32.

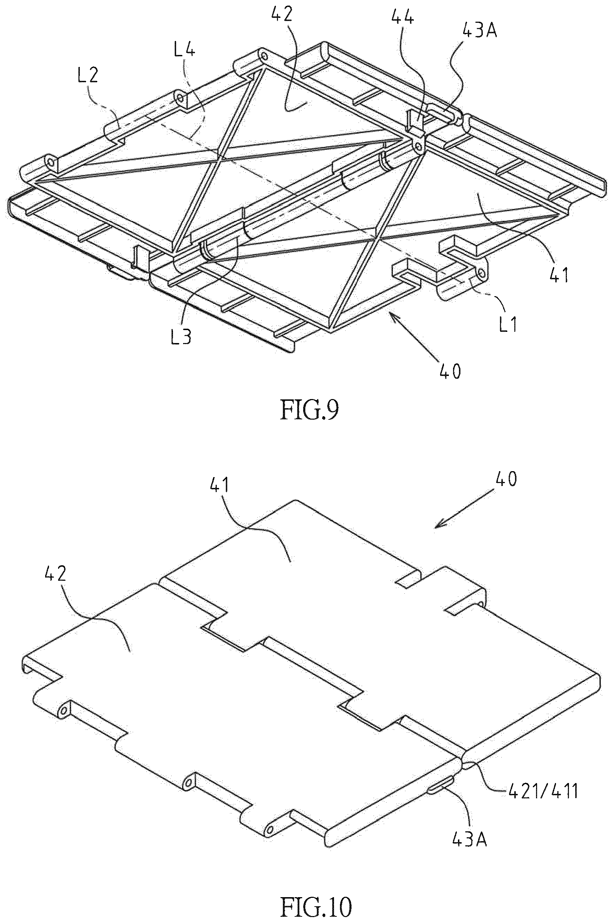

As shown in Fig. 8, 8A and 10, the upper edge of the rear side of the front plate body 41 and the upper edge of the front side of the rear plate body 42 are respectively provided with a first abutting part 411 and a second abutting part 421; when the front frame body 20 and the rear frame body 10 are in a flat state (as shown in Fig. 2 and 8), the first abutting part 411 and the second abutting part 421 are abutted against each other, so that the top surface of the front plate body 41 and the top surface of the rear plate body 42 form an included angle of less than 180°, and the front plate body 41 and the rear plate body 42 are in a dead point state, so the relative position between the front frame body 20 and the rear frame body 10 of the scooter will not be arbitrarily changed, thereby further improving the use stability and safety of the scooter.

As shown in Fig. 8 ~Fig. 10, the front plate body 41 and the rear plate body 42 are in a plate shape of a default thickness; or as shown in Fig. 12, the front plate body 41A and the rear plate body 42A are in a bending composition type of metal sheet.

As shown in Fig. 8, 8A, 8B, 9 and 10, one selected from the front plate body 41 and the rear plate body 42 is provided with an operation part 43A, and in the preferred embodiment, the operation part 43A is arranged above the rear plate body 42; before the limiting member 40 is engaged, and when the front frame body 20 and the rear frame body 10 are relatively retracted, it is convenient for the user to easily lift up the front plate body 41 and the rear plate body 42 from the operation part 43A. The specific embodiment type of the operation part 43A is as shown in Fig. 10, and it is in a bump type; also, the operation part 43B shown in Fig. 12 is in an open-hole type formed on the front plate body 41 (or the rear plate body 42), and it is also convenient to lift up the front plate body 41 and the rear plate body 42.

As shown in Fig. 9, one selected from the front plate body 41 and the rear plate body 42 is provided with at least one snap member 44, and the snap member 44 is selectively snapped onto the telescopic connection frame 30 structure (as shown in Fig. 11), this embodiment mainly aims that the snap member 44 snapped in the telescopic connection frame 30 structure can produce the appropriate assistance snapping and positioning effect for the flat state of the front plate body 41 and the rear plate body 42, so as to enhance the effect of preventing the front plate body 41 and the rear plate body 42 from jumping upward. Or, the top surface of the front plate body 41 and the rear plate body 42 forms a stepping surface for the user to step on by the foot, so as to further enhance the effect of preventing the front plate body 41 and the rear plate body 42 from jumping upward.

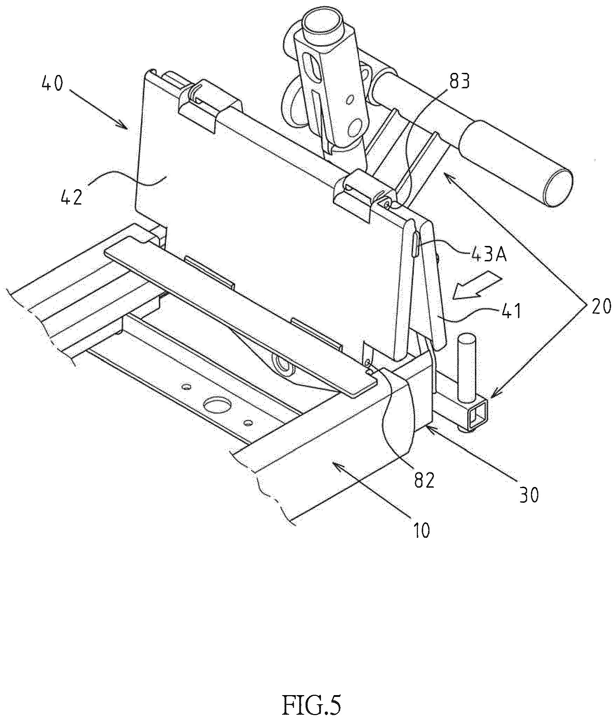

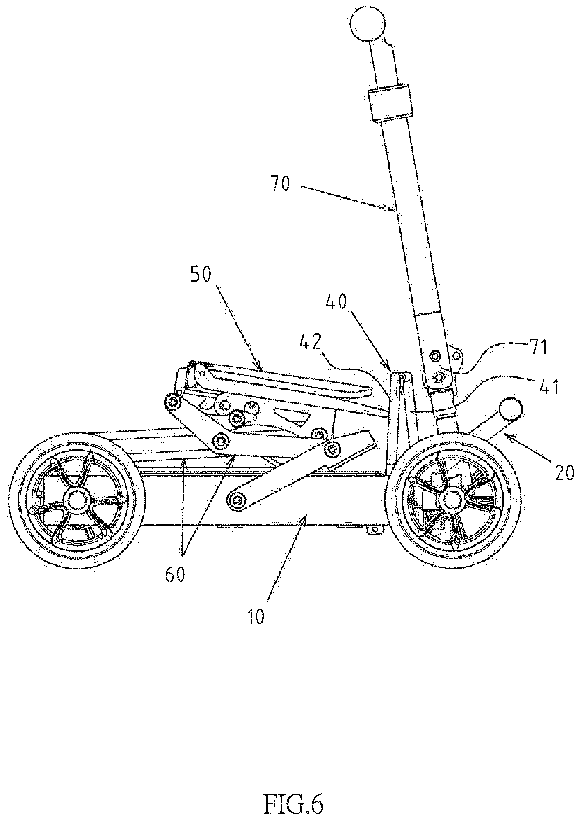

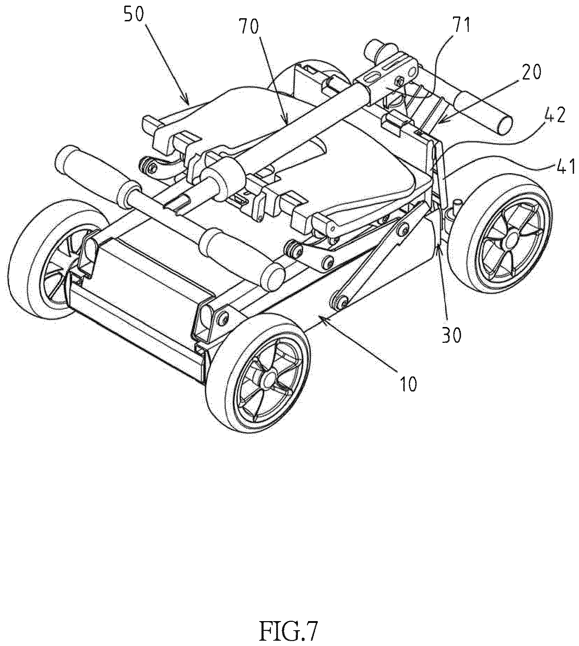

Based on the above structural composition types and technical features, the use of the preferred embodiment of the present invention is illustrated as follows: as shown in Fig. 1, the scooter is in a riding and driving state, at this time, the front frame body 20 is extended forward with respect to the rear frame body 10 by using the telescopic connection frame 30, when the front frame body 20 and the rear frame body 10 are close to each other by the force (such as the relative acting force of the components generated during driving), the first abutting part 411 and the second abutting part 421 will be abutted to each other, at this time with the different abutment set angle of the first abutting part 411 and the second abutting part 421, the top surface of the front plate body 41 and the rear plate body 42 may be in a state of 180° included angle (i.e., plane joint) (as shown in Fig. 8A); or, as shown in Fig. 8B, the top surface of the front plate body 41 and the rear plate body 42 in an included angle state of less than 180° (i.e., the zigzag surface is engaged), so that the front plate body 41 and the rear plate body 42 are in the dead point state, while the snap member 44 is snapped onto the telescopic connection frame 30 structure (see Fig. 11 for details). As shown in Fig. 2, when the scooter frame begins to fold, the seat 50 is firstly engaged towards the rear frame body 10 by the connecting rod structure 60, to lower its horizontal height. Next, referring to Fig. 5 and 6, when the user wants to further fold the scooter frame, first uses the operation part 43A to lift up the front plate body 41 and the rear plate body 42, so that the front plate body 41 and the rear plate body 42 are out of the dead point state, at the same time, the snap member 44 is also synchronously disengaged from the telescopic connection frame 30. When the user makes that the front plate body 41 and the rear plate body 42 are in a folded state with the third pivoting shaft member 83 as a pivot point (as shown in Fig. 5), the front frame body 20 is retracted relative to the rear frame body 10 by using the telescopic connection frame 30, so as to achieve the purpose of reducing the total length of the scooter frame. Referring to Fig. 7 for details, finally, the user uses the pivoting structure 71 of the scooter handlebar structure 70 to close and fix the folded seat 50, that is, the entire folding process of the scooter is completed.

## Claims

1. A telescopic frame structure of the scooter includes:
a rear frame body (10);
a front frame body (20), disposed at the front end interval of the rear frame body;
a telescopic connection frame (30) is disposed between the front frame body and the rear frame body to be retractable and adjustable under force, so that the front frame body and the rear frame body are selectively reciprocally movable to change the total length of the telescopic frame structure of the scooter; and
a limiting member (40) comprises a front plate body (41) and a rear plate body (42) disposed above the telescopic connection frame, the front plate body (41)
and the rear plate body (42) respectively have a front side and a rear side, wherein the front side of the plate body is pivoted to the rear edge of the front frame body through a first pivoting shaft member (81); the rear side of the rear plate body (42) is pivoted to the front edge of the rear frame body through a second pivoting shaft member (82);
the rear side of the front plate body is pivoted to the front side of the rear plate body through a third pivoting shaft member; when the telescopic connection frame is in an elongated state, the front plate body and the rear plate body are relatively interlocked by the third pivoting shaft member (83) in flat rotary fulcrum state; wherein the axle center definition of the first pivoting shaft member (81) forms a first pivoting axis (L1), the axle center definition of the second pivoting shaft member (82) forms a second pivoting axis (L2), and the axle center definition of the third pivoting shaft member (83) forms a third pivoting axis (L3); and the connecting definition between the first pivoting axis (L1) and the second pivoting axis (L2) forms a virtual connecting axis (L4), the virtual connecting axis is in an any state of horizontal line or approaching the horizontal line, and the virtual connecting axis (L4) corresponding to the third pivoting shaft member (L3) defines an intermediate line section (W) and the height of the third pivot axis is lower than the height of the intermediate line section.

2. The telescopic frame structure of the scooter defined in Claim 1, wherein the telescopic connection frame (30) includes two rod bodies (31, 32) at left and right interval configuration; the front plate body (41) and the bottom of the rear plate body (42) are provided with two abutting parts at left and right interval configuration, so that the two abutting parts (45, 46) are correspondingly abutted downward against the two rod bodies (31, 32).

3. The telescopic frame structure of the scooter defined in Claim 1, wherein the front plate body and the rear plate body are in a plate shape of a default thickness or in a bending composition type of metal sheet; the upper edge of the rear side of the front plate body and the upper edge of the front side of the rear plate body are respectively provided with a first abutting part and a second abutting part; when the front frame body relative to the rear frame body is extended towards in riding state, the first abutting part and the second abutting part are abutted against each other.

4. The telescopic frame structure of the scooter defined in Claim 1, wherein one selected from the front plate body and the rear plate body is provided with an operation part (43A), and the operation part is either in a bump type or in an open-hole type.

5. The telescopic frame structure of the scooter defined in Claim 2, wherein one selected from the front plate body and the rear plate body is provided with an operation part (43A), and the operation part is either in a bump type or in an open-hole type.

6. The telescopic frame structure of the scooter defined in Claim 3, wherein one selected from the front plate body and the rear plate body is provided with an operation part (43A), and the operation part is either in a bump type or in an open-hole type.

7. The telescopic frame structure of the scooter defined in Claim 1, wherein one selected from the front plate body and the rear plate body is provided with at least one snap member, and the snap member (44) is selectively snapped onto the telescopic connection frame structure.

8. The telescopic frame structure of the scooter defined in Claim 2, wherein one selected from the front plate body and the rear plate body is provided with at least one snap member, and the snap member (44) is selectively snapped onto the telescopic connection frame structure.

9. The telescopic frame structure of the scooter defined in Claim 3, wherein one selected from the front plate body and the rear plate body is provided with at least one snap member (44), and the snap member is selectively snapped onto the telescopic connection frame structure.

10. The telescopic frame structure of the scooter defined in Claim 4, wherein one selected from the front plate body and the rear plate body is provided with at least one snap member (44), and the snap member is selectively snapped onto the telescopic connection frame structure.

11. The telescopic frame structure of the scooter defined in Claim 1, wherein the top surface of the front plate body and the rear plate body forms a stepping surface for the user to step on by the foot, so as to further enhance the effect of preventing the front plate body and the rear plate body from jumping upward.

12. The telescopic frame structure of the scooter defined in Claim 2, wherein the top surface of the front plate body and the rear plate body forms a stepping surface for the user to step on by the foot, so as to further enhance the effect of preventing the front plate body and the rear plate body from jumping upward.

13. The telescopic frame structure of the scooter defined in Claim 3, wherein the top surface of the front plate body and the rear plate body forms a stepping surface for the user to step on by the foot, so as to further enhance the effect of preventing the front plate body and the rear plate body from jumping upward.

## Patentansprüche

1. Eine Teleskoprahmenstruktur des Scooters umfasst:
einen hinteren Rahmenkörper (10);
einen v orderen Rah menkörper (2 0), der am vorderen Endzwischenraum des hinteren Rahmenkörpers angeordnet ist;
einen zwischen dem vorderen Rahmenkörper und dem hinteren Rahmenkörper angeordneten Teleskopverbindungsrahmen (30), der unter Kraftanwendung ein- und ausfahrbar und verstellbar ist, sodass der vordere Rahmenkörper und der hintere Rahmenkörper zum Ändern der Gesamtlänge der Teleskoprahmenstruktur des Scooters selektiv wechselseitig bewegbar sind; und
ein Begrenzungselement (40), das einen vorderen Plattenkörper (41) und einen hinteren Plattenkörper (42) umfasst, die oberhalb des Teleskopverbindungsrahmens angeordnet sind, wobei der vordere Plattenkörper (41) und der hintere Plattenkörper (42) jeweils eine Vorderseite und eine Rückseite aufweisen, wobei die Vorderseite des Plattenkörpers durch ein erstes Schwenkachsenelement (81) zur Hinterkante des vorderen Rahmenkörpers geschwenkt wird; die Rückseite des hinteren Plattenkörpers (42) durch ein zweites Schwenkachsenelement (82) zur Vorderkante des hinteren Rahmenkörpers geschwenkt wird; die Rückseite des vorderen Plattenkörpers durch ein drittes Schwenkachsenelement zur Vorderseite des hinteren Rahmenkörpers geschwenkt wird; wobei, wenn sich der Teleskopverbindungsrahmen in einem verlängerten Zustand befindet, der vordere Plattenkörper und der hintere Plattenkörper durch das dritte Schwenkachsenelement (83) im Zustand eines flachen Drehpunkts miteinander verzahnt sind; wobei die Definition der Achsmitte des ersten Schwenkachsenelements (81) eine erste Schwenkachse (L1) bildet, die Definition der Achsmitte des zweiten Schwenkachsenelements (82) eine zweite Schwenkachse (L2) bildet, und die Definition der Achsmitte des dritten Schwenkachsenelements (83) eine dritte Schwenkachse (L3) bildet; und die Verbindungsdefinition zwischen der ersten Schwenkachse (L1) und der zweiten Schwenkachse (L2) bildet eine imaginäre Verbindungsachse (L4), wobei sich die imaginäre Verbindungsachse in einem beliebigen Zustand einer horizontalen Linie befindet oder sich der horizontalen Linie nähert, und die mit dem dritten Schwenkachsenelement (83) korrespondierende imaginäre Verbindungsachse (L4) einen Zwischenleitungsabschnitt (W) definiert und die Höhe der dritten Schwenkachse niedriger als die Höhe des Zwischenleitungsabschnitts ist.

2. Die Teleskoprahmenstruktur des Scooters nach Anspruch 1, worin der Teleskopverbindungsrahmen (30) zwei Stabkörper (31, 32) an der linken und rechten Zwischenraumkonfiguration umfasst; wobei der vordere Plattenkörper (41) und der Boden des hinteren Plattenkörpers (42) mit zwei Anlageteilen an der linken und rechten Zwischenraumkonfiguration versehen sind, sodass die zwei Anlageteile (45, 46) abwärts korrespondierend an den zwei Stabkörpern (31, 32) anliegen.

3. Die Teleskoprahmenstruktur des Scooters nach Anspruch 1, worin der vordere Plattenkörper und der hintere Plattenkörper eine Plattenform mit einer Standarddicke oder einen Typ einer Biegezusammensetzung von Metallblech aufweisen; wobei die Oberkante der Rückseite des vorderen Plattenkörpers und die Oberkante der Vorderseite des hinteren Plattenkörpers jeweils mit einem ersten Anlageteil und einem zweiten Anlageteil versehen sind; wobei, wenn der vordere Rahmenkörper relativ zum hinteren Rahmenkörper in Richtung Fahrzustand ausgefahren ist, der erste Anlageteil und der zweite Anlageteil aneinander anliegen.

4. Die Teleskoprahmenstruktur des Scooters nach Anspruch 1, worin ein ausgewählter der vorderen Plattenkörper und der hinteren Plattenkörper mit einem Betriebsteil (43A) versehen ist und dabei das Betriebsteil entweder vom Erhebungstyp oder vom Typ mit offenem Loch ist.

5. Die Teleskoprahmenstruktur des Scooters nach Anspruch 2, worin ein ausgewählter der vorderen Plattenkörper und der hinteren Plattenkörper mit einem Betriebsteil (43A) versehen ist und dabei das Betriebsteil entweder vom Erhebungstyp oder vom Typ mit offenem Loch ist.

6. Die Teleskoprahmenstruktur des Scooters nach Anspruch 3, worin ein ausgewählter der vorderen Plattenkörper und der hinteren Plattenkörper mit einem Betriebsteil (43A) versehen ist und dabei das Betriebsteil entweder vom Erhebungstyp oder vom Typ mit offenem Loch ist.

7. Die Teleskoprahmenstruktur des Scooters nach Anspruch 1, worin ein ausgewählter der vorderen Plattenkörper und der hinteren Plattenkörper mit mindestens einem Einrastelement versehen ist und dabei das Einrastelement (44) selektiv in die Teleskopverbindungsrahmenstruktur eingerastet ist.

8. Die Teleskoprahmenstruktur des Scooters nach Anspruch 2, worin ein ausgewählter der vorderen Plattenkörper und der hinteren Plattenkörper mit mindestens einem Einrastelement versehen ist und dabei das Einrastelement (44) selektiv in die Teleskopverbindungsrahmenstruktur eingerastet ist.

9. Die Teleskoprahmenstruktur des Scooters nach Anspruch 3, worin ein ausgewählter der vorderen Plattenkörper und der hinteren Plattenkörper mit mindestens einem Einrastelement (44) versehen ist und dabei das Einrastelement selektiv in die Teleskopverbindungsrahmenstruktur eingerastet ist.

10. Die Teleskoprahmenstruktur des Scooters nach Anspruch 4, worin ein ausgewählter der vorderen Plattenkörper und der hinteren Plattenkörper mit mindestens einem Einrastelement (44) versehen ist und dabei das Einrastelement selektiv in die Teleskopverbindungsrahmenstruktur eingerastet ist.

11. Die Teleskoprahmenstruktur des Scooters nach Anspruch 1, worin die obere Oberfläche des vorderen Plattenkörpers und des hinteren Plattenkörpers eine Trittfläche bildet, auf die der Benutzer mit dem Fuß auftreten kann, um den Effekt der Verhinderung eines Hochschnellens des vorderen Plattenkörpers und des hinteren Plattenkörpers weiter zu verstärken.

12. Die Teleskoprahmenstruktur des Scooters nach Anspruch 2, worin die obere Oberfläche des vorderen Plattenkörpers und des hinteren Plattenkörpers eine Trittfläche bildet, auf die der Benutzer mit dem Fuß auftreten kann, um den Effekt der Verhinderung eines Hochschnellens des vorderen Plattenkörpers und des hinteren Plattenkörpers weiter zu verstärken.

13. Die Teleskoprahmenstruktur des Scooters nach Anspruch 3, worin die obere Oberfläche des vorderen Plattenkörpers und des hinteren Plattenkörpers eine Trittfläche bildet, auf die der Benutzer mit dem Fuß auftreten kann, um den Effekt der Verhinderung eines Hochschnellens des vorderen Plattenkörpers und des hinteren Plattenkörpers weiter zu verstärken.

## Revendications

1. Une structure de châssis télescopique d'engin à roues comprenant :
un corps arrière (10) de châssis ;
un corps avant (20) de châssis, disposé à l'intervalle d'extrémité avant du corps arrière de châssis ;
un châssis de connexion télescopique (39) est disposé entre le corps avant de châssis et le corps arrière de châssis pour être rétractable et réglable par force, de sorte que le corps avant de châssis et le corps arrière de châssis sont sélectivement mobiles dans un sens et dans l'autre pour modifier la longueur totale de la structure de châssis télescopique de l'engin à roues ; et
un organe de limitation (49) comprenant un corps avant en plaque (41) et un corps arrière en plaque (42) disposés au-dessus du châssis de connexion télescopique, le corps avant en plaque (41) et le corps arrière en plaque (42) ayant chacun un côté avant et un côté arrière, le côté avant du corps de plaque étant pivotant par rapport au bord arrière du corps avant de châssis par l'intermédiaire d'un premier organe (81) formant arbre pivotant ;
le côté arrière du corps arrière en plaque (42) étant pivotant par rapport au bord avant du corps arrière de châssis par l'intermédiaire d'un deuxième organe (82) formant arbre pivotant ;
le côté arrière du corps avant en plaque étant pivotant par rapport au bord avant du corps arrière en plaque par l'intermédiaire d'un troisième organe formant arbre pivotant ; lorsque le châssis de connexion télescopique est dans un état d'allongement, le corps avant en plaque et le corps arrière en plaque sont verrouillés l'un par rapport à l'autre par le troisième organe formant arbre pivotant (83) dans un état de pivotement rotatif plat ; la définition de centre d'axe du premier organe (81) formant arbre pivotant forme un premier axe de pivotement (L1), la définition de centre d'axe du deuxième organe (82) formant arbre pivotant forme un deuxième axe de pivotement (L2), et la définition de centre d'axe du troisième organe formant arbre pivotant (83) forme un troisième axe de pivotement (L3) ; et la définition de connexion entre le premier axe de pivotement (L1) et le deuxième axe de pivotement (L2) forme un axe de connexion virtuel (L4), l'axe de connexion virtuel est dans tous les cas selon une ligne horizontale ou se rapproche d'une ligne horizontale, et l'axe de connexion virtuel (L4) correspondant au troisième organe formant arbre pivotant (L3) définit une section de ligne intermédiaire (W) et la hauteur du troisième axe de pivotement est inférieure à la hauteur de la section de ligne intermédiaire.

2. La structure de châssis télescopique de l'engin à roues défini par la revendication 1, dans laquelle le châssis de connexion télescopique (30) comprend deux corps de tige (31, 32) à configuration d'intervalle gauche et droit; le corps avant en plaque (41) et la partie inférieure du corps arrière en plaque (42) sont pourvus de deux parties de butée à configuration d'intervalle gauche et droite, de sorte que les deux parties de butée (45, 46) sont en butée vers le bas de manière correspondante contre les deux corps de tiges (31, 32).

3. La structure de châssis télescopique de l'engin à roues défini par la revendication 1, dans laquelle le corps avant en plaque et le corps arrière en plaque sont en forme de plaque d'une épaisseur par défaut ou dans une composition de flexion de type tôle ; le bord supérieur du côté arrière du corps avant en plaque et le bord supérieur du côté avant du corps arrière en plaque sont respectivement pourvus d'une première partie de butée et d'une deuxième partie de butée ; lorsque le corps avant de châssis est étendu par rapport au corps arrière de châssis vers l'état de conduite, la première partie de butée et la deuxième partie de butée sont en butée l'une contre l'autre.

4. La structure de châssis télescopique de l'engin à roues défini par la revendication 1, dans laquelle l'un au choix parmi le corps avant en plaque et le corps arrière en plaque est pourvu d'une partie fonctionnelle (43A), et la partie fonctionnelle est soit selon un type à bossage, soit selon un type à trou ouvert.

5. La structure de châssis télescopique de l'engin à roues défini par la revendication 2, dans laquelle l'un au choix parmi le corps avant en plaque et le corps arrière en plaque est pourvu d'une partie fonctionnelle (43A), et la partie fonctionnelle est soit selon un type à bossage, soit selon un type à trou ouvert.

6. La structure de châssis télescopique de l'engin à roues défini par la revendication 3, dans laquelle l'un au choix parmi le corps avant en plaque et le corps arrière en plaque est pourvu d'une partie fonctionnelle (43A), et la partie fonctionnelle est soit selon un type à bossage, soit selon un type à trou ouvert.

7. La structure de châssis télescopique de l'engin à roues défini par la revendication 1, dans laquelle l'un au choix parmi le corps avant en plaque et le corps arrière en plaque est pourvu d'au moins un élément d'encliquetage, et l'élément d'encliquetage (44) est encliqueté sélectivement sur la structure de châssis de connexion télescopique.

8. La structure de châssis télescopique de l'engin à roues défini par la revendication 2, dans laquelle l'un au choix parmi le corps avant en plaque et le corps arrière en plaque est pourvu d'au moins un élément d'encliquetage, et l'élément d'encliquetage (44) est sélectivement encliqueté sur la structure de châssis de connexion télescopique.

9. La structure de châssis télescopique de l'engin à roues défini par la revendication 3, dans laquelle l'un au choix parmi le corps avant en plaque et le corps arrière en plaque est pourvu d'au moins un élément d'encliquetage (44), et l'élément d'encliquetage est sélectivement encliqueté sur la structure de châssis de connexion télescopique.

10. La structure de châssis télescopique de l'engin à roues défini par la revendication 4, dans laquelle l'un au choix parmi le corps avant en plaque et le corps arrière en plaque est pourvu d'au moins un élément d'encliquetage (44), et l'élément d'encliquetage est sélectivement encliqueté sur la structure de châssis de connexion télescopique.

11. La structure de châssis télescopique de l'engin à roues défini par la revendication 1, dans laquelle la surface supérieure du corps avant en plaque et le corps arrière en plaque forme une surface formant marchepied sur laquelle l'utilisateur peut mettre son pied, de manière à améliorer encore l'effet consistant à empêcher le corps avant en plaque et le corps arrière en plaque de sauter vers le haut.

12. La structure de châssis télescopique de l'engin à roues défini par la revendication 2, dans laquelle la surface supérieure du corps avant en plaque et du corps arrière en plaque forment une surface formant marchepied sur laquelle l'utilisateur peut mettre son pied, de manière à améliorer encore l'effet consistant à empêcher le corps avant en plaque et le corps arrière en plaque de sauter vers le haut.

13. La structure de châssis télescopique de l'engin à roues défini par la revendication 3, dans laquelle la surface supérieure du corps avant en plaque et le corps arrière en plaque forment une surface formant marchepied sur laquelle l'utilisateur peut mettre son pied, de manière à améliorer encore l'effet consistant à empêcher le corps avant en plaque et le corps arrière en plaque de sauter vers le haut.
